# EUROPÄISCHE PATENTANMELDUNG

(11) **EP 2 450 541 A1**
(43) Veröffentlichungstag der Anmeldung: **09.05.2012**
(21) Anmeldenummer: 11182177.3
(22) Anmeldetag: 21.09.2011
(51) Int. Cl.: F01N 3/20, B60K 15/077

(54) **Tankanordnung**

(30) Priorität: 09.11.2010 DE 102010043600
(71) Anmelder: Robert Bosch GmbH, 70442 Stuttgart (DE)
(72) Erfinder: Schreiber, Ruben, 71640 Ludwigsburg (DE); Wagner, Andreas, 70563 Stuttgart (DE)

(57) **Zusammenfassung**

Es wird eine Tankanordnung 1, 20 zur Bevorratung einer Flüssigkeit 2, insbesondere eines flüssigen Hilfsmittels zur Abgasnachbehandlung, beispielsweise zur nachmotorischen Entstickung des Abgases einer Brennkraftmaschine, mit einem Mittel 3, 7 zum Ansaugen der Flüssigkeit vorgeschlagen, wobei eine Saugstelle 7 des Mittels sich nahe eines Tankbodens 9 befindet, und wobei der Saugstelle 7 benachbart eine Rampenanordnung 5, 50, 51, 52, 53, 56, 59 am Tankboden 9 angeordnet ist.

## Beschreibung

### Stand der Technik

Die Erfindung geht aus von einer Tankanordnung nach der Gattung des unabhängigen Anspruchs.

Bei Kraftwagen mit Verbrennungsmotor muss aufgrund der in den nächsten Jahren anstehenden verschärften Absatzgesetzgebung unter anderem das Schadstoff Stickstoffoxid reduziert werden. Eine Methode, die hierbei zur Anwendung kommt, ist das Verfahren der selektiven katalytischen Reduktion, bei dem das Schadstoff Stickstoffoxid unter Zuhilfenahme von flüssigem Reduktionsmittel zu Stickstoff und Wasser reduziert wird. Das Reduktionsmittel wird in einer Leitung vom Tank zum Dosiermodul gefördert. Das heute eingesetzte Reduktionsmittel, eine wässrige Harnstofflösung, gefriert bei -11 °C.

Aus der DE 10 2006 027 487 ist es bekannt, wässrige Harnstofflösung in einem Tank aufzubewahren, in dessen Innenraum sich eine elektrische Heizung befindet, welche dazu geeignet ist, etwaig gefrorenes Reduktionsmittel aufzutauen. Eine im Innenraum des Tanks angeordnete, becherförmige und als Teilreservoir innerhalb des Tanks dienende Funktionseinheit gewährleistet hierbei eine Aufnahme der Heizung. Diese Funktionseinheit kann über eine Pumpe mit der wässrigen Harnstofflösung befüllt werden, um das reduzierende Medium an der Ansaugstelle im Tank bereitzustellen.

Aus der DE 10 2006 046 899 ist es bekannt, einen Tank zur Bevorratung eines Reduktionsmittels mit einem vertieften Tankbodenbereich, einem sogenannten Sumpf, zu versehen, welcher ebenfalls zur Sicherstellung der Bereitstellung des reduzierenden Mediums an der Ansaugstelle im Tank dient.

### Offenbarung der Erfindung

Die erfindungsgemäße Tankanordnung hat demgegenüber den Vorteil eines einfachen Aufbaus. Es muß kein Sumpf beziehungsweise keine entsprechend geeignete Pumpen- und dazugehörige Leitungskonstruktion mehr vorgesehen werden, um sicherzustellen, dass stets eine hinreichende Menge an Flüssigkeit im Bereich der Ansaugstelle im Tank bereitgestellt wird, solange sich überhaupt noch eine gewisse Menge an Flüssigkeit bzw. AdBlue im Tank befindet. Die Rampenanordnung bietet den Vorteil, dass mit einfachen Mitteln eine Verringerung des Totvolumens erreicht wird, d.h dass nur noch eine geringe Restmenge im Tank verbleiben muß, die nicht ausgesaugt werden kann. In vorteilhafter Weise wird erfindungsgemäß ein schwappsicherer Bereich eingerichtet, der sich bei Inbetriebnahme des Kraftfahrzeugs allein durch die Bewegung des Kraftfahrzeugs selbstständig füllt und stets gefüllt bleibt, solange sich überhaupt noch hinreichend Flüssigkeit im Tank befindet.

Weitere Vorteile ergeben sich durch die in den abhängigen Ansprüchen genannten Merkmale.

Weist die Rampenanordnung einen schrägen Bereich, beispielsweise eine ansteigende Flanke, auf, so wird in vorteilhafter Weise effektiv die Fahrzeugdynamik zunutze gemacht, um einen einwandfreien Tankbetrieb beziehungsweise ein störungsfreies Absaugen der im Tank enthaltenen Flüssigkeit über ein beispielsweise als Sauglanze ausgebildetes Mittel zum Ansaugen der Flüssigkeit bis zu einer nur kleinen im Tank verbleibenden Restmenge zu gewährleisten und somit lange eine sichere Eindosierung des Mittels beispielsweise in den Abgastrakt des Fahrzeugs sicherzustellen.

Weitere Vorteile ergeben sich durch die in den weiteren abhängigen Ansprüchen und in der Beschreibung genannten Merkmale.

Kurze Beschreibung der Zeichnungen

Ausführungsbeispiele der Erfindung sind in der Zeichnung dargestellt und in der nachfolgenden Beschreibung näher erläutert.

Es zeigen
Figur 1
   eine Tankanordnung in Seitenansicht,
Figur 2
   eine Draufsicht auf einen Tankboden einer Tankanordnung,
Figur 3
   eine weitere Tankanordnung in Seitenansicht,
Figur 4
   eine weitere Draufsicht auf einen Tankboden einer Tankanordnung,
Figur 5
   eine überhängende Rampenanordnung,
Figur 6
   eine weitere Rampenanordnung,
Figur 7
   eine weitere Rampenanordnung,
Figur 8
   eine Rampenanordnung mit einem Kanalisierungsbereich und
Figur 9
   eine ringförmige Rampenanordnung.

### Ausführungsformen der Erfindung

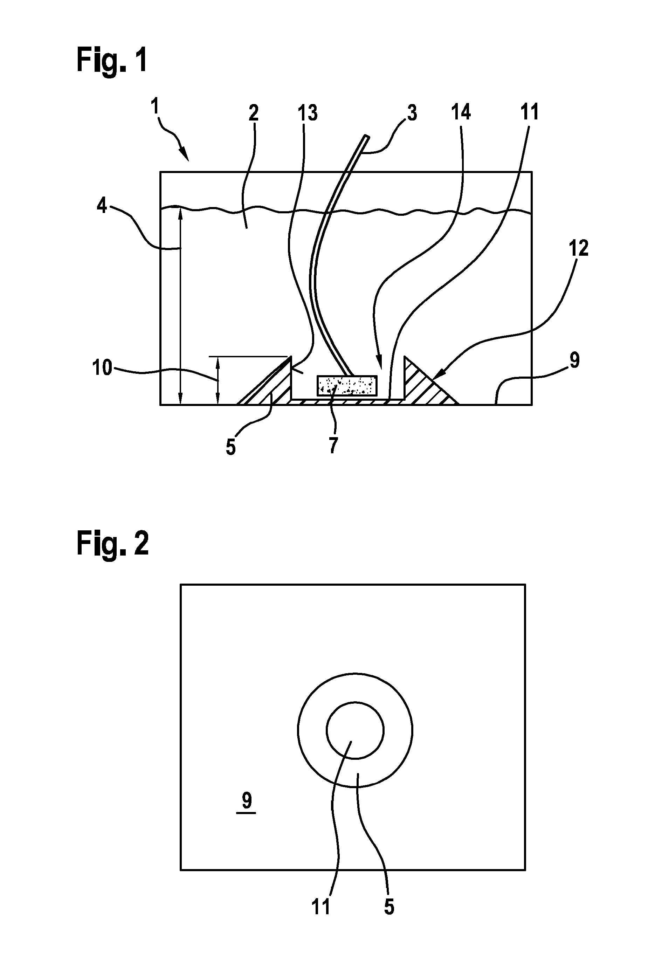

Figur 1 zeigt eine Querschnittsseitenansicht auf eine Tankanordnung 1 und eine als sogenannter Vulkankörper beziehungsweise Vulkanring 5 ausgebildete Rampenanordnung, welche auf dem Boden 9 der Tankanordnung 1 aufliegt. Figur 2 zeigt eine Draufsicht auf den Tankboden dieser Tankanordnung 1. Im Tank befindet sich eine wässrige Harnstofflösung, sogenanntes ,,AdBlue" 2, bis zu einer maximalen Füllhöhe 4 der Tankanordnung 1. Eine als Ansaugschlauch ausgebildete sogenannte Sauglanze 3 ragt von oben in den Tank. Ihr unteres, dem Tankboden 9 nahes Ende bildet eine mit einem beheizbaren Filterelement ausgestattete Saugstelle 7. Die Saugstelle 7 ist in der horizontalen Tankbodenebene allseitig vom Vulkanring 5 umgeben. Die Höhe 10 des Vulkanrings 5 ist klein im Vergleich zur maximalen Füllhöhe 4. Der Vulkanring 5 weist einen schrägen Bereich 12 auf, der auf der der Saugstelle 7 abgewandten Seite des Vulkanrings vom Tankboden ausgehend bis auf die Höhe 10 ansteigt. Die mit Heizung und Filterelement ausgestattete Saugstelle 7 ist mittels nicht näher dargestellter Positionierungsmittel auf einem mit dem Vulkanring 5 verbundenen Bodenbereich 11 angeordnet. Der Bodenbereich 11 erstreckt sich innerhalb des durch den Vulkanring 5 umschlossenen Gebiets und ist dünn im Vergleich zur Höhe des Vulkanrings 5.

Der in dem Tank eingebrachte Vulkankörper 5 bildet also ein Flüssigkeitsreservoir 14, in dem sich die Ansaugstelle befindet. Das Reservoir ist von einem Ring umgeben, der in Richtung Reservoir ansteigt. Ist die Tankanordnung erheblich unter der maximalen Füllhöhe befüllt, so dient die Rampenanordnung gewissermaßen als Flüssigkeitsfalle. Auftretende Trägheitskräfte bei der Bewegung der Tankanordnung bzw. eines Kraftfahrzeugs, in dem die Tankanordnung installiert ist, führen dazu, dass Flüssigkeit über den schrägen Bereich leicht in den von der Rampenanordnung abgegrenzten Bereich hin zur Saugstelle schwappen, jedoch kaum wieder diesen abgegrenzten bzw. umschlossenen Bereich verlassen kann, der, von der Saugstelle aus betrachtet, bis zur Höhe 10 allseitig von einer senkrecht stehenden Fläche 13 umgeben ist. In einem stationären Bewegungszustand - wenn also keine Trägheitskräfte auftreten -, und erst recht bei Stillstand des Kraftfahrzeugs, kann sich das Reservoir überhaupt nicht entleeren.

In einer zur Anordnung nach Figur 1 und 2 alternativen Ausführungsform kann der Vulkanring auch ohne Vulkanboden ausgeführt sein, so dass sich zwischen der Saugstelle und dem Tankboden kein weiteres Bodenelement befindet, gegebenenfalls mit Ausnahme von Befestigungselementen, die dazu dienen, die Saugstelle bzw. den Heizungs-/Filteraufbau unter geringem Abstand vom Boden am Tankboden befestigen zu können. Voraussetzung für die vulkanbodenlose Ausführung des Vulkanrings ist dessen flüssigkeitsdichte Befestigung am Tankboden, so dass über die Rampe geschwappte Flüssigkeit nicht wieder in den übrigen Bereich des Tanks abfließen kann.

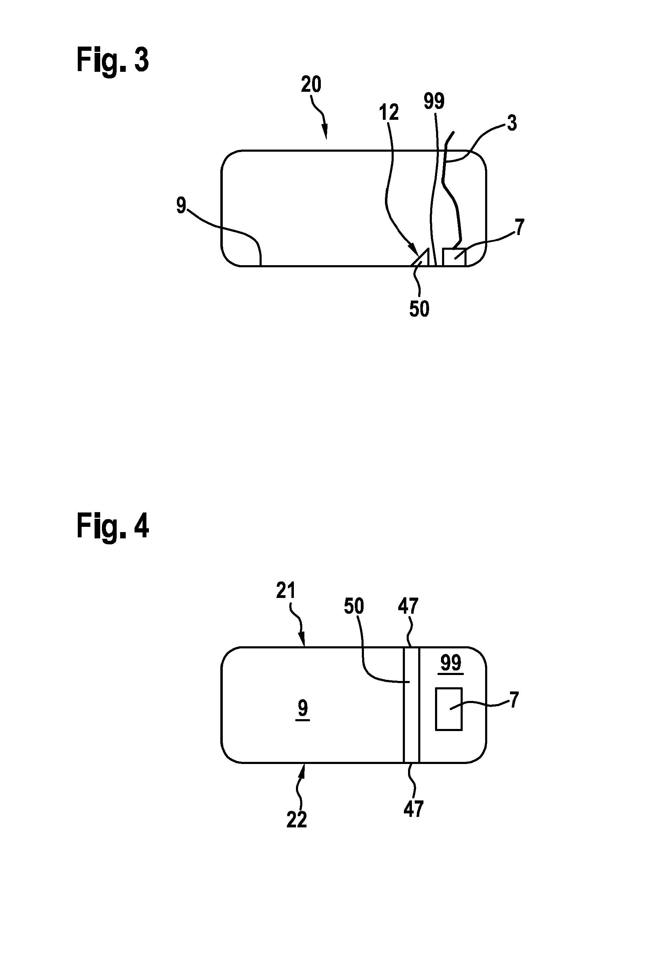

Figur 3 und Figur 4 zeigen eine weitere Tankanordnung 20 in Seitenansicht bzw. in Draufsicht auf den Tankboden 9. Die Rampenanordnung bzw. der ,,Vulkankörper" ist hier in Form eines Stegs 50 ausgebildet, dessen Enden 47 flüssigkeitsdicht an der jeweils benachbarten Tankwand 21, 22 anliegen.

Der durch den Steg und die Tankwände gebildete, bis zur Höhe der Rampenanordnung abgegrenzte Teilbereich 99 um die Saugstelle/Saugöffnung bzw. um den Filter mit Heizung dient als Teilreservoir für die bevorratete Flüssigkeit, in ähnlicher Weise wie ein solches Reservoir innerhalb des Tanks durch den Vulkanring bei der Tankanordnung gemäß den Figuren 1 und 2 bereitgestellt wird.

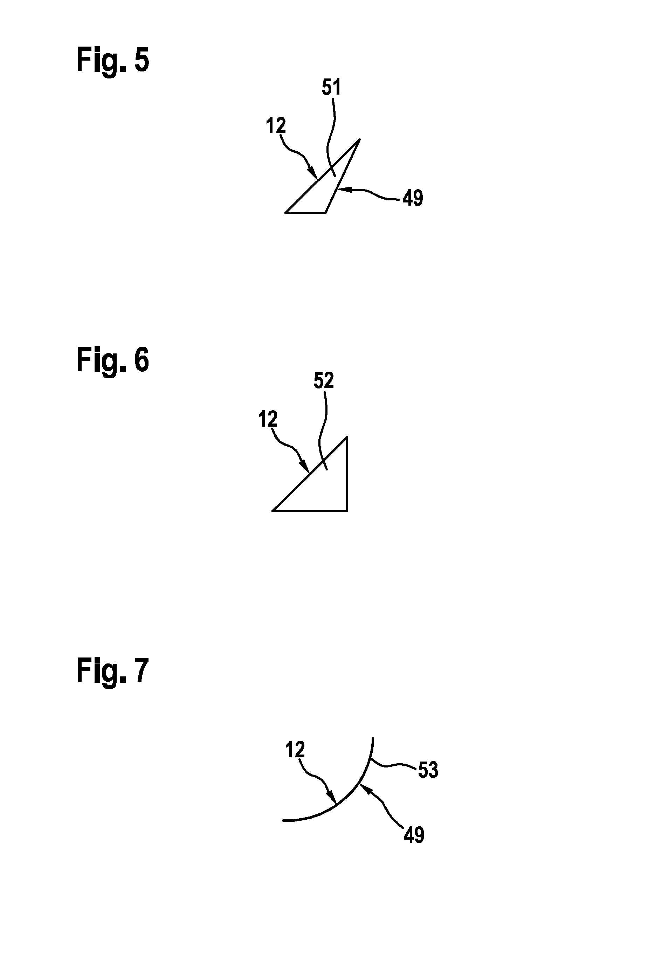

Die Figuren 5 bis 7 zeigen Querschnitte durch verschiedene Ausgestaltungen 51, 52 und 53 eines Vulkanrings bzw. eines Stegs. Ihnen gemeinsam ist das Vorhandensein eines schrägen Bereichs 12 auf der der Saugstelle abgewandten Seite und eines demgegenüber steil abfallenden Bereichs auf der der Saugstelle zugewandten Seite. Figur 5 zeigt ein Beispiel 51 mit einem überhängenden Bereich 49, Figur 6 ein Beispiel 52 mit einer senkrechten Fläche 13 auf der der Saugstelle zugewandten Seite. Figur 7 zeigt ein weiteres Beispiel 53 mit einem überhängenden Bereich 49, das jedoch im Unterschied zur Ausführungsform gemäß Figur 5 nicht keilförmig, sondern als dünne und gebogene Wand ausgebildet ist, so dass sowohl der schräge Bereich 12 als auch der überhängende Bereich 49 eine sich einander entsprechende, nach oben gebogene Kurvenform aufweisen. Die keilförmig ausgebildeten Varianten können als mit Material ausgefüllte Körper oder als Hohlkörper ausgebildet sein. In Form von Hohlkörpern können eingesetzte Rampenanordnungen bei geeigneter, dem Fachmann bekannter Materialwahl gleichzeitig als Eisdruckausgleichselemente dienen.

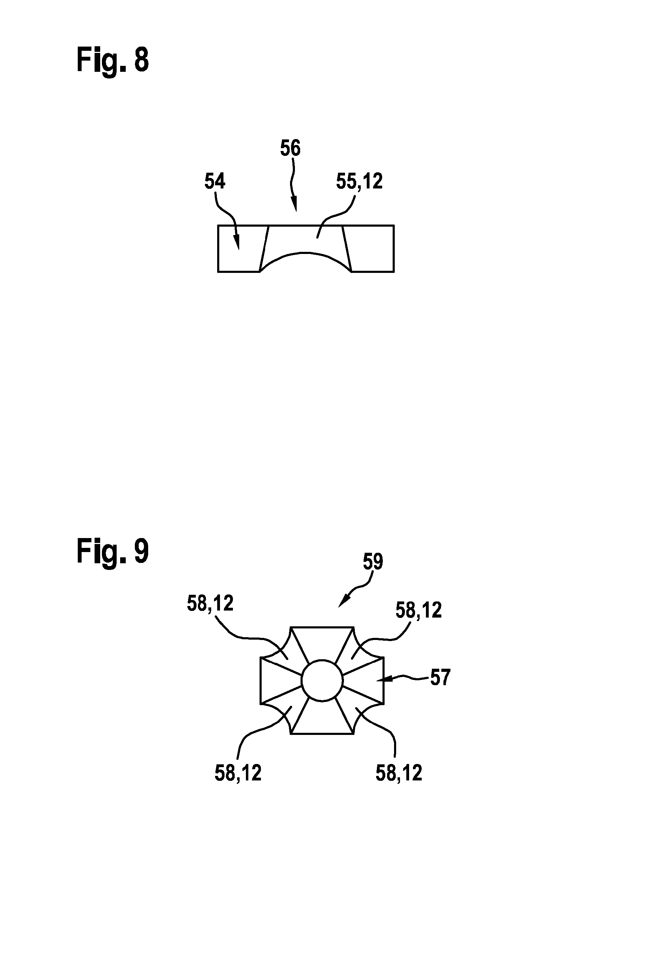

Figur 8 zeigt eine Rampenanordnung 56 in Form eines Stegs in Draufsicht von oben, der als senkrechte Wand 54 ausgebildet ist, in die ein schräger Bereich 12 in Form eines Kanalisierungsbereichs 55 eingebracht ist. Der Kanalisierungsbereich steigt vom Tankboden auf der der Saugstelle abgewandten Seite bis zur vorgesehenen Höhe der Rampenanordnung auf der der Saugstelle zugewandten Seite an. Er verengt sich außerdem in Richtung zur Saugstelle und ist auf der der Saugstelle abgewandten Seite abgerundet ausgeführt.

Figur 9 stellt, ebenfalls in Draufsicht von oben, eine weitere Rampenanordnung 59 in Form eines abgewandelten Vulkanrings dar. Er besitzt in seiner senkrecht stehenden Wand 57 Vertiefungen 58, die eine Kanalisierung des Mediums zum Reservoir hin bewirken.

## Patentansprüche

1. Tankanordnung (1, 20) zur Bevorratung einer Flüssigkeit (2), insbesondere eines flüssigen Hilfsmittels zur Abgasnachbehandlung, beispielsweise zur nachmotorischen Entstickung des Abgases einer Brennkraftmaschine, mit einem Mittel (3, 7) zum Ansaugen der Flüssigkeit, wobei eine Saugstelle (7) des Mittels sich nahe eines Tankbodens (9) befindet, **dadurch gekennzeichnet, dass** der Saugstelle (7) benachbart eine Rampenanordnung (5, 50, 51, 52, 53, 56, 59) am Tankboden (9) angeordnet ist.

2. Tankanordnung (1, 20) nach Anspruch 1, **dadurch gekennzeichnet, dass** die Rampenanordnung (5, 50, 51, 52, 53, 56, 59) eine Höhe (10) aufweist, die klein ist im Vergleich zu einer maximalen Füllhöhe (4) der Tankanordnung.

3. Tankanordnung (1, 20) nach Anspruch 1 oder 2, **dadurch gekennzeichnet, dass** die Rampenanordnung (5, 50, 51, 52, 53, 56, 59) mindestens einen schrägen Bereich (12) aufweist, wobei der schräge Bereich (12) derart ausgerichtet ist, dass sich eine nahe des Tankbodens (9) befindliche Menge der Flüssigkeit infolge von Schwappbewegungen sprungschanzenartig in Richtung Saugstelle (7) bewegen kann.

4. Tankanordnung (1, 20) nach Anspruch 3, **dadurch gekennzeichnet, dass** der mindestens eine schräge Bereich (12) als sogenannter Kanalisierungsbereich (55, 58) ausgebildet ist derart, dass er von senkrecht stehenden Bereichen (54, 57) der Rampenanordnung (56, 59) begrenzt ist.

5. Tankanordnung (1, 20) nach einem der vorhergehenden Ansprüche, **dadurch gekennzeichnet, dass** die Rampenanordnung (51, 53) an mindestens einer Stelle (49) auf der zur Saugstelle (7) gerichteten Seite überhängt.

6. Tankanordnung (1, 20) nach einem der vorhergehenden Ansprüche, **dadurch gekennzeichnet, dass** die Rampenanordnung als Hohlkörper ausgebildet ist.

7. Tankanordnung (1, 20) nach Anspruch 6, **dadurch gekennzeichnet, dass** der Hohlkörper zum Zwecke eines Eisdruckausgleichs reversibel kompressibel ist.

8. Tankanordnung (1, 20) nach einem der Ansprüche 1 bis 5, **dadurch gekennzeichnet, dass** die Rampenanordnung als nach oben gebogene Wandung (53) ausgebildet ist.

9. Tankanordnung (1, 20) nach einem der vorhergehenden Ansprüche, **dadurch gekennzeichnet, dass** die Rampenanordnung (5, 59) ringförmig ausgebildet ist und die Saugstelle (7) umschließt.

10. Tankanordnung (1, 20) nach einem der Ansprüche 1 bis 8, **dadurch gekennzeichnet, dass** die Rampenanordnung (50) als Steg ausgebildet ist und sich derart entlang des Tankbodens erstreckt, dass sich seine Enden (47) flüssigkeitsdicht an einer Tankwand anschließen.
